# EUROPÄISCHE PATENTSCHRIFT

(11) **EP 3 736 193 B1**
(45) Veröffentlichungstag und Bekanntmachung des Hinweises auf die Patenterteilung: **18.01.2023**
(21) Anmeldenummer: 20167994.1
(22) Anmeldetag: 03.04.2020
(51) Int. Cl.: B61D 27/00, B60H 1/00, B60H 1/24

(54) **FAHRZEUG ZUR PERSONENBEFÖRDERUNG MIT EINER KLIMATISIERUNGSANORDNUNG**
PASSENGER TRANSPORT VEHICLE WITH AN AIR-CONDITIONING SYSTEM
VÉHICULE DESTINÉ AU TRANSPORT DE PERSONNES DOTÉ D'UN CLIMATISEUR

(30) Priorität: 08.05.2019 DE 102019206615
(43) Veröffentlichungstag der Anmeldung: 11.11.2020
(73) Patentinhaber: Siemens Mobility GmbH, 81739 München (DE)
(72) Erfinder: Kasap, Irfan, 44653 Herne (DE); Plinninger, Thomas, 83026 Rosenheim (DE)

(56) Entgegenhaltungen:
- WO-A1-2016/016049
- DE-A1- 3 048 226
- DE-A1-102016 122 483
- DE-C- 699 316
- DE-U1- 9 319 829
- JP-A- 2016 049 939

## Beschreibung

Die Erfindung bezieht sich auf ein Fahrzeug zur Personenbeförderung mit einer Klimatisierungsanordnung, die ein Klimagerät, das im Dachbereich des Fahrzeugs angeordnet ist, einen Hauptklimakanal, der von dem Klimagerät mit konditionierter Zuluft beaufschlagt wird und sich in dem Dachbereich in Längsrichtung des Fahrzeugs erstreckt, und wenigstens einen, von dem Hauptklimakanal ausgehenden, entlang von Seitenwänden des Fahrzeugs nach unten Richtung Fußboden eines Fahrgastinnenraumes des Fahrzeugs verlaufenden Luftkanalzweig umfasst, wobei ein unterer Endabschnitt des Luftkanalzweiges in eine behälterförmige Luftausblaseinrichtung mündet, die mehrere Luftausblasöffnungen aufweist, die unmittelbar in den Fahrgastinnenraum des Fahrzeugs münden.

Bei solchen Fahrzeugen kann es sich beispielsweise um Schienenfahrzeuge oder um Busse zum Transport von Fahrgästen handeln, wie sie in der JP 2016 049939 A, der DE 93 19 829 U1, der DE 30 48 226 A1 oder der WO 2016/016049 A1 beschrieben sind. Insbesondere moderne Schienenfahrzeuge müssen hohe Anforderungen an einen Fahrgastkomfort erfüllen. Diese Anforderungen sind beispielsweise für den Nahverkehr in der DIN-EN 14750 beschrieben. Daraus ergeben sich aufgrund wechselnder Randbedingungen an verschiedenen Punkten im Fahrgastinnenraum bestimmte Werte für Temperatur und Luftgeschwindigkeit. Während im Kühlfall überwiegend von der Decke her ausgeblasen wird, bei der Störungen durch Inneneinrichtungen, wie Fahrgastsitze, nicht gegeben sind, wird im Heizfall typischerweise im Fußraum der Fahrgäste ausgeblasen. Dies bedeutet für den Heizfall, dass vorgesehene Luftausblasöffnungen mit der Inneneinrichtung des Fahrgastraums um den verfügbaren Platz im unteren Teil der Seitenwand konkurrieren. Auch besteht seitens Betreibern von Fahrzeugen zur Personenbeförderung häufig Bedarf, die Reiselandschaft (z. B. Bestuhlung) im Fahrgastinnenraum von Zeit zu Zeit zu verändern. Dies bringt es mit sich, dass vor allem die Position der Sitze flexibel gestaltet werden kann.

Insbesondere bei Nahverkehrs-Schienenfahrzeugen, die nicht mittels Konvektionsheizern beheizt werden, sind für die Verteilung von Warmluft seitlich des Fahrgastinnenraumes in Bodennähe angebrachte Kanäle vorgesehen. Diese müssen jedoch wegen unterschiedlicher Sitzlandschaften und Befestigungsmöglichkeiten für jedes Fahrzeugprojekt separat eingestellt werden. Auch beanspruchen diese Kanäle Bauraum im unteren Bereich der Seitenwand der Fahrzeuge.

Ausgehend hiervon liegt der Erfindung die Aufgabe zugrunde, ein Fahrzeug der eingangs genannten Art derart weiterzuentwickeln, dass die Klimatisierungsanordnung weniger komplex gestaltet ist und ein Aufwand an Umbaumaßnahmen an der Klimatisierungsanordnung bei einer Änderung der Inneneinrichtung des Fahrgastraumes vermindert wird.

Diese Aufgabe wird gelöst durch ein Fahrzeug mit den Merkmalen des Anspruchs 1.

Danach zeichnet sich das eingangs beschriebene Fahrzeug dadurch aus, dass die Luftausblaseinrichtung im Fußbereich einer Türsäulenverkleidung des Fahrzeugs angeordnet ist, die sich in Längsrichtung des Fahrzeugs zwischen einer Einstiegstür zu einem Einstiegsbereich des Fahrzeugs und einer Seitenwand befindet, die einen Sitzbereich des Fahrzeugs seitlich nach Außen begrenzt und ein erster Teil der Luftausblasöffnungen zum Ausblasen von Luft entlang der Seitenwand des Fahrzeugs ausgerichtet sind.

Bei dieser Art von Luftausblasung mittels der behälterförmigen Luftblaseinrichtung in den Fahrgastinnenraum des Fahrzeugs wird auf die im Stand der Technik typischerweise vorgesehenen Bodenkanäle verzichtet, die sich in Längsrichtung des Fahrzeugs zwischen zwei Einstiegstüren entlang des unteren Bereichs der Seitenwand des Fahrzeugs erstrecken. Dies bedeutet eine erhebliche Einsparung an Komponenten. Zudem ergibt sich eine Unabhängigkeit der Luftausblasung von einer vorgesehenen Sitzlandschaft im Fahrgastinnenraum. Wenn beispielsweise die Inneneinrichtungen / die Sitzlandschaft in einem Fahrgastinnenraum geändert werden, reicht es aus, die zunächst vorgesehene Luftausblaseinrichtung durch eine andere, in ihrer äußeren Form ähnliche Luftausblaseinrichtung zu ersetzen, deren Luftausblasöffnungen derart beschaffen sind, dass die erforderlichen Werte für Temperatur und Luftgeschwindigkeit an verschiedenen Punkten im Fahrgastinnenraum eingehalten werden. Alternativ ist es auch möglich, eine vorhandene Luftausblaseinrichtung hinsichtlich der Ausbildung und Anordnung ihrer Luftausblasöffnungen geeignet umzugestalten.

Es ist bevorzugt, wenn der Luftkanalzweig einen kreisförmigen Kanalquerschnitt aufweist und die Luftkanalausblaseinrichtung quaderförmig ausgebildet ist. Der kreisförmige Kanalquerschnitt des Luftkanalzweigs hat den Vorteil, dass sich grundsätzlich Ausblasströmungen von der Luftausblaseinrichtung aus in alle Richtungen ergeben. Form und Größe der Luftauslassöffnungen in einzelnen Oberflächenbereichen der Luftausblaseinrichtung kann die Ausblasverteilung der Luftströmung an die Größe und Anforderungen einzelner Innenraumbereiche anpassen.

In anderen Ausführungsvarianten kann die Luftausblaseinrichtung auch einen runden oder halbrunden Horizontal-Querschnitt aufweisen. Die oben angegebene quaderförmige Ausbildung zeichnet sich dadurch aus, dass sie fertigungstechnisch sehr einfach zu realisieren ist.

Die jeweilige Auslegung der Luftausblaseinrichtung bei unterschiedlicher Luftausblasumgebung kann bevorzugt mittels CFD (computational fluid dynamics) bestimmt werden, insbesondere auch, was Ausrichtung und Abmessungen der einzelnen vorgesehenen Luftausblasöffnungen angeht.

Bei einer solchen Positionierung der Luftausblaseinrichtung ist es möglich, sowohl den Einstiegsbereich des Fahrzeugs als auch den Sitzbereich geeignet mit konditionierter Warmluft zu versorgen. Typischerweise werden beide Türsäulenverkleidungen einer Einstiegstür mit einer solchen Luftausblaseinrichtung ausgestattet sein, so dass sie gemeinsam die geeignete Luftausblasung für den Einstiegsbereich realisieren. Wenn auch die nächste benachbarte Einstiegstür mit zwei solchen Luftausblaseinrichtungen ausgestattet ist, kann auch ein sich zwischen den beiden Einstiegstüren in Längsrichtung des Fahrzeugs befindlicher Sitzbereich geeignet mit konditionierter Warmluft beaufschlagt werden.

Die Luftausblasöffnungen der Luftausblaseinrichtung sind vorteilhafterweise zum Realisieren einer überwiegend horizontalen Luftausblascharakteristik der Luftblaseinrichtung dimensioniert und angeordnet. Dabei heißt "überwiegend horizontal", dass ein Geschwindigkeitsvektor der ausgeblasenen Luft in horizontaler Richtung größer ist als in vertikaler Richtung.

Bevorzugt sind die Luftausblasöffnungen in mehrere Teile unterteilt, die jeweils andere Innenraumbereiche des Fahrzeugs mit Luft versorgen. Ein erster Teil der Luftausblasöffnungen ist zum Ausblasen von Luft entlang der Seitenwand des Fahrzeugs ausgerichtet, so dass von einer Türsäulenverkleidung aus die Luft im Wesentlichen entlang der Seitenwand unter den seitenwandnahen Fahrgastsitzen hindurch gerichtet ist. Bei quaderförmiger Ausbildung der Luftausblaseinrichtung befindet sich der erste Teil der Luftausblasöffnungen an derjenigen Seitenwand der Luftausblaseinrichtung, die dem Sitzbereich zugewandt ist.

Ein zweiter Teil der Luftausblasöffnungen kann zum Ausblasen von Luft in einem spitzen horizontalen Winkel (z. B. 45°) zur Seitenwand in den Sitzbereich hinein ausgerichtet sein. Dieser zweite Teil an Luftausblasöffnungen befindet sich bei quaderförmiger Ausbildung der Luftausblaseinrichtung an derjenigen Außenwand der Luftblaseinrichtung, die einem Mittelgang des Fahrzeugs zugewandt ist. An derselben Seite kann sich ein dritter Teil der Luftausblasöffnungen befinden, der zum Ausblasen von Luft in Querrichtung des Fahrzeugs vorgesehen ist.

Ein vierter Teil der Luftausblasöffnungen kann zum Ausblasen von Luft entlang der Einstiegstür ausgerichtet sein. Bei quaderförmiger Ausbildung der Luftausblaseinrichtung befinden sich diese Luftausblasöffnungen an der dem Einstiegsbereich zugewandten Seite der Luftausblaseinrichtung.

Grundsätzlich können sich die Luftausblasöffnungen unmittelbar in ebenen Außenwänden der Luftausblaseinrichtung befinden, insbesondere wenn sie quaderförmig ausgebildet ist. Zur besseren Ausrichtung der ausströmenden Luft kann vorgesehen sein, dass die Luftausblaseinrichtung für einen oder mehrere der oben beschriebenen Teile der Luftausblasöffnungen Strömungskanalansätze zum Beaufschlagen von ausströmender Luft mit einer vorbestimmten Strömungsrichtung aufweist, an deren Austrittsende dann jeweils eine der Luftausblasöffnungen angeordnet ist.

Bei quaderförmiger Ausbildung der Luftausblaseinrichtung können die Luftausblasöffnungen an jeder Vertikalseite beispielsweise über mehrere Spalte verteilt sein, wobei eine Breite der Luftausblasöffnungen gleichbleibend sein kann, während - beispielsweise bei dem ersten Teil der Luftausblasöffnungen - die Luftauslassöffnungen im bodennahen Bereich eine größere Höhe aufweisen können als im vom Boden entfernteren Bereich.

Es ist besonders günstig, wenn die Luftauslassöffnungen derart angeordnet und bemessen sind, dass beispielsweise der erste Teil der Luftausblasöffnungen einen höheren Volumenstrom mit geringerer Luftgeschwindigkeit im Sitzbereich bietet, wobei dies an eine im Sitzbereich vorhandene Personenzahl angepasst sein kann. Demgegenüber kann der vierte Teil der Luftausblasöffnungen, die eine Luftausblasung in den Einstiegsbereich gestatten, so gestaltet sein, dass sich vergleichsweise weniger Volumenstrom ergibt, jedoch eine höhere Geschwindigkeit der Luftströmung ermöglicht wird. Insbesondere kann die aus dem vierten Teil der Luftausblasöffnungen ausströmende Luft auch auf den Fußboden des Einstiegsbereichs gerichtet sein.

Ein Ausführungsbeispiel der Erfindung wird nachfolgend unter Bezugnahme auf die Zeichnungen noch näher erläutert, wobei funktionsgleiche / -ähnliche Komponenten mit denselben Bezugszeichen bezeichnet sind. Es zeigen:
- Figur 1: eine perspektivische Ansicht auf eine Luftausblaseinrichtung, angeordnet im Fußbereich einer Türsäulenverkleidung eines Schienenfahrzeugs,
- Figur 2: eine schematische Ansicht von oben auf einen Fußbodenbereich des Schienenfahrzeugs von Figur 1,
- Figur 3: eine schematische Ansicht von oben eines Abschnitts des Fußbodenbereichs von Figur 2,
- Figur 4: eine perspektivische Ansicht eines Übergangsbereichs zwischen einem Einstiegsbereich und einem Sitzbereich des Schienenfahrzeugs von Figur 1,
- Figur 5: eine Ansicht von oben des Übergangsbereichs zwischen dem Einstiegsbereich und dem Sitzbereich von Figur 4 und
- Figur 6: eine Seitenansicht des Übergangsbereichs zwischen Einstiegsbereich und Sitzbereich von Figur 4.

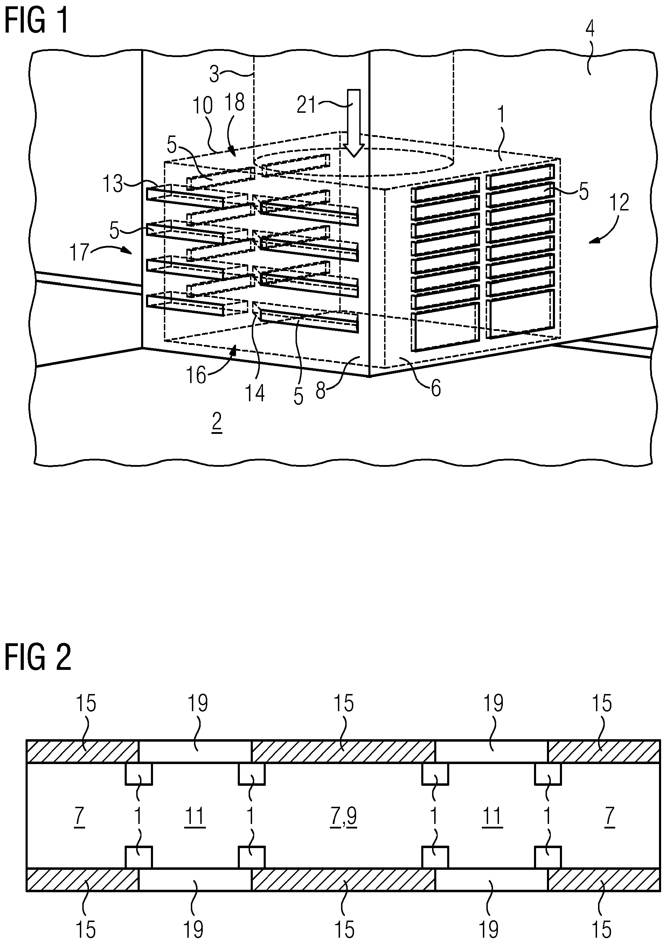

Wie aus Figur 1 hervorgeht, bildet im dargestellten Ausführungsbeispiel eine quaderförmige/würfelförmige Luftausblaseinrichtung 1 eines von mehreren Austrittsenden einer Klimatisierungsanordnung eines Schienenfahrzeugs. In herkömmlicher Weise umfasst diese Klimatisierungsanordnung ein typischerweise im Dachbereich des Schienenfahrzeugs angeordnetes Klimagerät, welches konditionierte Zuluft für einen Fahrgastinnenraum des Schienenfahrzeugs bereitstellt. Das Klimagerät ist an einen Hauptklimakanal angeschlossen, welcher sich in Längsrichtung des Schienenfahrzeugs im Dachbereich erstreckt. Von diesem Hauptklimakanal gehen eine Mehrzahl von Luftkanalzweigen aus, von denen diejenigen zum Transport von Warmluft im Wesentlichen vertikal entlang von Seitenwänden des Schienenfahrzeugs verlaufen, und zwar Richtung eines Fußboden 2 eines Fahrgastinnenraums des Schienenfahrzeugs.

In Figur 1 ist beispielhaft ein Luftkanalzweig 3 dargestellt, der einen kreisrunden Kanalquerschnitt aufweist und an eine Oberseite der behälterförmigen Luftausblaseinrichtung 1 angeschlossen ist. Dabei ist in Figur 1 die Einströmrichtung mit einem Pfeil 21 gekennzeichnet.

Die über den Luftkanalzweig 3 einströmende Warmluft / Zuluft verteilt sich im Wesentlichen gleichmäßig in der behälterförmigen Luftausblaseinrichtung 1. Die Luftausblaseinrichtung 1 ist unmittelbar in einem Fußbereich einer Türsäulenverkleidung 4 angeordnet. Die der Türsäulenanordnung 4 zugewandte Seite der Luftausblaseinrichtung 1 ist verschlossen. Die drei verbleibenden vertikalen Seitenwände 6, 8, 10 der behälterförmigen Luftausblaseinrichtung 1 sind jeweils mit einer Mehrzahl von Luftausblasöffnungen 5 ausgestattet, die in ihrer Dimensionierung, Ausrichtung und Anordnung variieren. Aus Gründen der Übersichtlichkeit ist in Figur 1 auf der jeweiligen vertikalen Seitenwände 6, 8, 10 der Luftausblaseinrichtung 1 nur jeweils eine Luftaustrittsöffnung 5 mit einem Bezugszeichen bezeichnet.

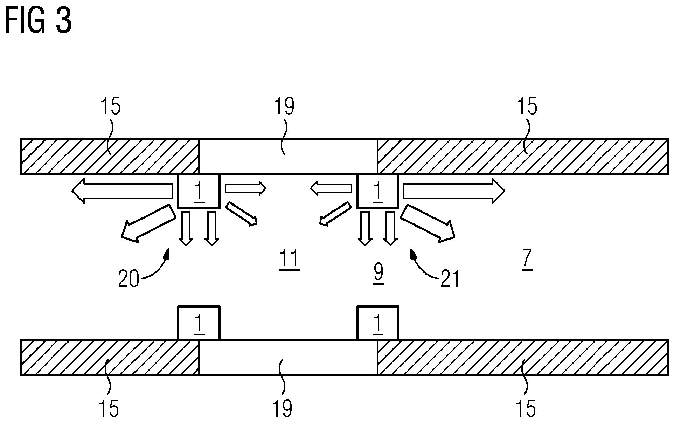

Die in Figur 1 rechts dargestellte vertikale Seitenwand 6 der Luftausblaseinrichtung 1 ist einem Sitzbereich 7 (vgl. Figuren 2 und 3), eine in Längsrichtung des Schienenfahrzeugs verlaufende Seitenwand 8 ist einem Mittelgang 9 und eine weitere Seitenwand 10 der Luftausblaseinrichtung 1 ist einem Einstiegsbereich 11 zugewandt.

Ein erster Teil 12 der Luftaustrittsöffnungen 5 ist an der Seitenwand 6 vorgesehen. Im dargestellten Ausführungsbeispiel sind die Luftaustrittsöffnungen 5 in zwei horizontal nebeneinander angeordneten Spalten angeordnet, wobei unterste Luftaustrittsöffnungen 5 größer dimensioniert sind als die weiteren als horizontale Schlitze ausgebildeten Luftaustrittsöffnungen 5 des ersten Teils 12. Dies bewirkt, dass im bodennahen Bereich ein hoher Volumenstrom mit geringer Luftgeschwindigkeit realisiert wird. Mit zunehmendem vertikalen Abstand vom Boden 2 aus steigt die Luftgeschwindigkeit an, während der Volumenstrom abnimmt. Sämtliche Luftaustrittsöffnungen 5 des ersten Teils 12 sind als einfache Durchbrüche der Seitenwand 6 ausgebildet.

Bei der dem Mittelgang 9 zugewandten Seitenwand 8 der Luftausblaseinrichtung 1 sind die Luftausblasöffnungen 5 jeweils am Ende von Strömungskanalansätzen 13, 14 vorgesehen. Dabei sind die einem zweiten Teil 16 der hier in Form von horizontalen Schlitzen vorliegenden Luftausblasöffnungen 5 zugeordneten Strömungskanalansätze 14 derart ausgerichtet, dass Luft in einem spitzen horizontalen Winkel von ca. 45° zu einer Seitenwand 15 des Schienenfahrzeugs ausgeblasen wird. Der zweite Teil 16 der Luftausblasöffnungen 5, die wiederum vertikal übereinander angeordnet sind, sorgen somit für einen schrägen Eintritt der Zuluft in den Sitzbereich 7 des Schienenfahrzeugs.

Ein dritter Teil 17 der Luftausblasöffnungen 5 ist von der Luftausblaseinrichtung 1 aus gerade in Richtung auf den Mittelgang 9 gerichtet, wobei die Luftausblasöffnungen 5 des dritten Teils 17 jeweils an den Austrittsenden der Strömungskanalansätze 13 angeordnet sind. Auch die Luftausblasöffnungen 5 des dritten Teils 17 sind vertikal übereinander angeordnet und in Form horizontaler Schlitze ausgeführt.

Ein vierter Teil 18 der Luftausblasöffnungen 5 ist an der Seitenwand 10 vorgesehen, wobei die Luftausblasöffnungen 5 als einfache Durchbrüche vorliegen. Die Luftausblasöffnungen 5 des vierten Teils beaufschlagen einen türnahen Bodenbereich des Einstiegsbereichs 11 mit Zuluft, wobei die Luftausblasöffnungen 5 in zwei vertikalen, nebeneinander liegenden Reihen angeordnet und als horizontale Schlitze ausgeführt sind.

Aus Figur 2 ergibt sich eine Anordnung von Luftausblaseinrichtungen 1, die mit der zuvor beschriebenen Luftausblaseinrichtung 1 prinzipiell baugleich sind, im Fahrgastinnenraum des Schienenfahrzeugs. Es ist ersichtlich, dass die beiden Längsseiten des Schienenfahrzeugs (vereinfacht) abwechselnd von Seitenwänden 15 und Türen 19 gebildet sind. Die behälterförmigen Luftausblaseinrichtungen 1 sind jeweils in einem Übergangsbereich zwischen einem Einstiegsbereich 11 und einem Sitzbereich 7, genauer gesagt an einem Fußende jeweiliger Türsäulenverkleidungen 4 vorgesehen. Dabei ist zu beachten, dass von den vier Teilen 12, 16, 17, 18 an Luftausblasöffnungen 5 geprägte Luftaustrittsmuster einer jeweiligen Luftausblaseinrichtung 1 jeweils spiegelsymmetrisch bezüglich einer mittleren vertikalen Querebene eines der Einstiegsbereiche 11 gewählt sind. Dessen Ergebnis ist in Figur 3 dargestellt. Pfeilmuster 19, 20 veranschaulichen, dass von einem bodennahen Bereich der Seitenwand 15 aus in einer Horizontalebene über den Sitzbereich 7, den Mittelgang 9 hin zum Einstiegsbereich 11 der Volumenstrom zunächst abnimmt, und zwar unter Zunahme der Luftgeschwindigkeit. Dies bewirkt, dass hohe Luftvolumenströme in den Sitzbereich 7 eingeleitet werden. Erst von einem mittleren Abschnitt des Einstiegsbereichs 11 aus in Richtung auf einen türnahen Abschnitt des Einstiegsbereichs 11 nimmt der Luftvolumenstrom wieder zu, wobei die Luftgeschwindigkeit herabgesetzt wird. Dabei ist der Luftvolumenstrom im Einstiegsbereich grundsätzlich auch direkt auf den Boden 2 gerichtet. Allgemein erfolgt der Luftaustritt über sämtliche Luftausblasöffnungen 5 im Wesentlichen horizontal.

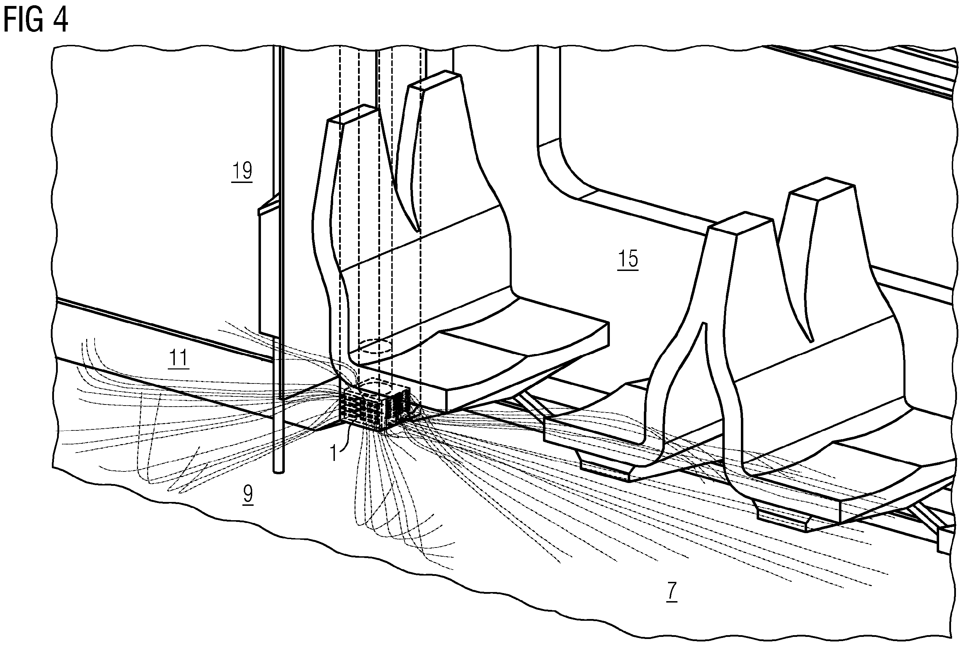

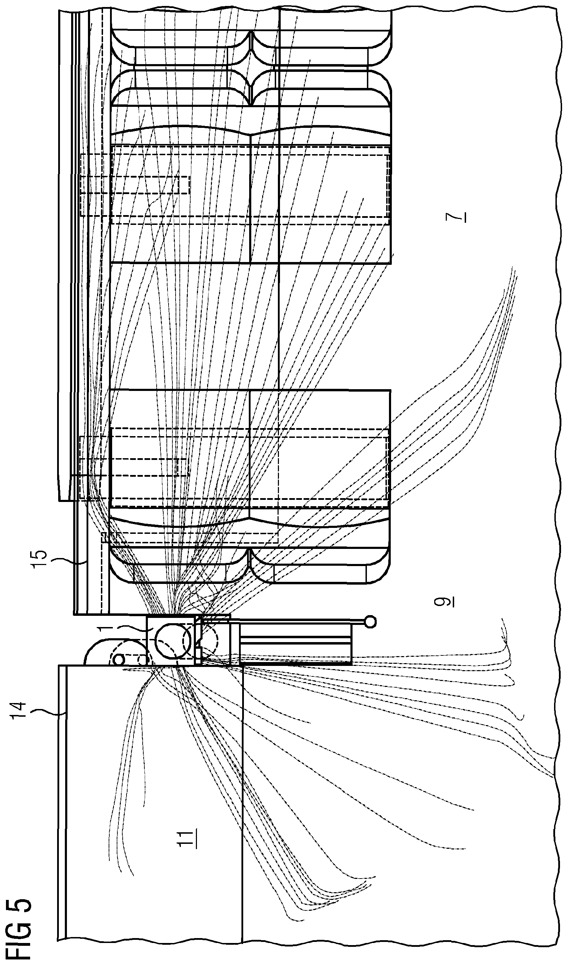

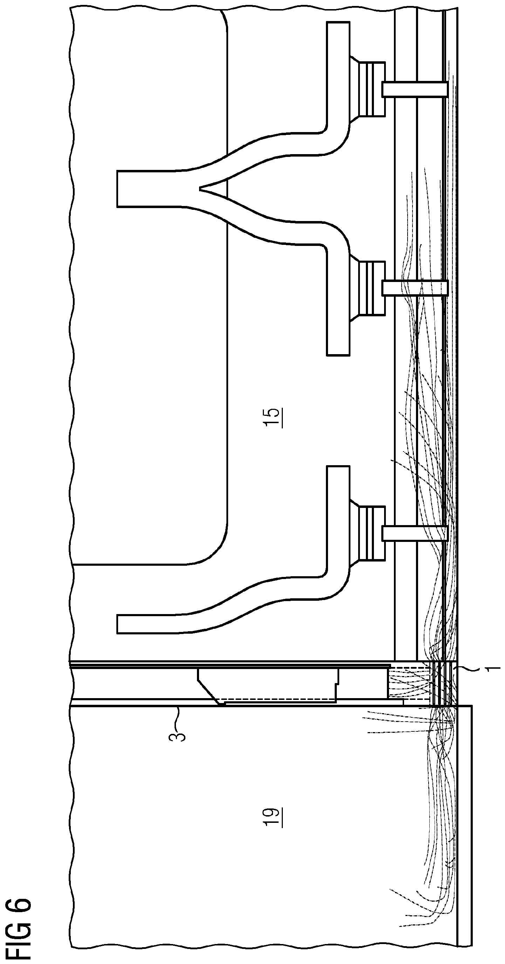

Die Figuren 4, 5 und 6 veranschaulichen Berechnungsbeispiele (CFD) für die Luftvolumenströmungen, die von der Luftausblaseinrichtung 1 ausgehen. Diese zeigen noch mehr im Detail die zuvor erläuterte räumliche Verteilung / das Luftaustrittsmuster der von der Luftausblaseinrichtung 1 unmittelbar in den Fahrgastinnenraum des Fahrzeugs ausströmenden Zuluft.

## Patentansprüche

1. Fahrzeug zu Personenbeförderungszwecken mit einer Klimatisierungsanordnung, die ein Klimagerät, das im Dachbereich des Fahrzeugs angeordnet ist, einen Hauptklimakanal, der von dem Klimagerät mit konditionierter Luft beaufschlagt wird und sich in dem Dachbereich in Längsrichtung des Fahrzeugs erstreckt, und wenigstens einen, von dem Hauptklimakanal ausgehenden, entlang von Seitenwänden des Fahrzeugs nach unten Richtung Fußboden eines Fahrgastinnenraumes des Fahrzeugs verlaufenden Luftkanalzweig (3) umfasst, wobei ein unterer Endabschnitt des Luftkanalzweiges (3) in eine behälterförmige Luftausblaseinrichtung (1) mündet, die mehrere Luftausblasöffnungen (5) aufweist, die unmittelbar in den Fahrgastinnenraum des Fahrzeugs münden, **dadurch gekennzeichnet, dass** die Luftausblaseinrichtung (1) im Fußbereich einer Türsäulenverkleidung (4) des Fahrzeugs angeordnet ist, die sich in Längsrichtung des Fahrzeugs zwischen einer Einstiegstür (19) zu einem Einstiegsbereich (11) des Fahrzeugs und einer Seitenwand (15) befindet, die einen Sitzbereich (7) des Fahrzeugs seitlich nach Außen begrenzt und ein erster Teil (12) der Luftausblasöffnungen (5) zum Ausblasen von Luft entlang der Seitenwand (15) des Fahrzeugs ausgerichtet sind.

2. Fahrzeug nach Anspruch 1,
**dadurch gekennzeichnet, dass**
der Luftkanalzweig (3) einen kreisförmigen Kanalquerschnitt aufweist und die Luftausblaseinrichtung (1) quaderförmig ausgebildet ist.

3. Fahrzeug nach Anspruch 1 oder 2,
**dadurch gekennzeichnet, dass**
die Luftausblasöffnungen (5) der Luftausblaseinrichtung (1) zum Realisieren einer überwiegend horizontalen Luftausblascharakteristik der Luftausblaseinrichtung dimensioniert und angeordnet sind.

4. Fahrzeug nach einem der Ansprüche 1 bis 3,
**dadurch gekennzeichnet, dass**
ein zweiter Teil (16) der Luftausblasöffnungen (5) zum Ausblasen von Luft in einem spitzen horizontalen Winkel zur Seitenwand (15) in den Sitzbereich (7) ausgerichtet sind.

5. Fahrzeug nach einem der Ansprüche 1 bis 4,
**dadurch gekennzeichnet, dass**
ein dritter Teil (17) der Luftausblasöffnungen (5) zum Ausblasen von Luft in Querrichtung des Fahrzeugs ausgerichtet sind.

6. Fahrzeug nach einem der Ansprüche 1 bis 5,
**dadurch gekennzeichnet, dass**
ein vierter Teil (18) der Luftausblasöffnungen (5) zum Ausblasen von Luft entlang der Einstiegstür (19) ausgerichtet sind.

7. Fahrzeug nach einem der Ansprüche 1 bis 6,
**dadurch gekennzeichnet, dass**
die Luftausblaseinrichtung (1) Strömungskanalansätze (13, 14) zum Beaufschlagen von ausströmender Luft mit einer vorbestimmten Strömungsrichtung aufweist, an deren Austrittsende jeweils eine der Luftausblasöffnungen (5) angeordnet ist.

## Claims

1. Vehicle for passenger transport, having an air-conditioning arrangement which comprises a air-conditioning unit arranged in the roof region of the vehicle, a main air-conditioning channel supplied with conditioned air from the air-conditioning unit and extending in the roof region in the longitudinal direction of the vehicle, and at least one air-channel branch (3) departing from the main air-conditioning channel and running along side walls of the vehicle downwards in the direction of the floor of a passenger compartment of the vehicle, wherein a lower end section of the air-channel branch (3) opens out into a container-like air blowing-out device (1) having multiple air blowing-out openings (5) which directly open out into the passenger compartment of the vehicle,
**characterized in that**
the air blowing-out device (1) is arranged in the base area of a door-pillar panelling (4) of the vehicle, which is situated, in the longitudinal direction of the vehicle, between an entry door (19) to an entry area (11) of the vehicle and a side wall (15) which laterally outwardly delimits a seating area (7) of the vehicle, and a first portion (12) of the air blowing-out openings (5) is oriented for blowing-out of air along the side wall (15) of the vehicle.

2. Vehicle according to Claim 1,
**characterized in that**
the air-channel branch (3) has a circular channel cross section, and the air blowing-out device (1) is of cuboidal form.

3. Vehicle according to Claim 1 or 2,
**characterized in that**
the air blowing-out openings (5) of the air blowing-out device (1) are dimensioned and arranged for realizing a predominantly horizontal air blowing-out characteristic of the air blowing-out device.

4. Vehicle according to one of Claims 1 to 3,
**characterized in that**
a second portion (16) of the air blowing-out openings (5) is oriented for blowing-out of air at an acute horizontal angle to the side wall (15) into the seating area (7).

5. Vehicle according to one of Claims 1 to 4,
**characterized in that**
a third portion (17) of the air blowing-out openings (5) is oriented for blowing-out of air in the transverse direction of the vehicle.

6. Vehicle according to one of Claims 1 to 5,
**characterized in that**
a fourth portion (18) of the air blowing-out openings (5) is oriented for blowing-out of air along the entry door (19).

7. Vehicle according to one of Claims 1 to 6,
**characterized in that**
the air blowing-out device (1) has flow-channel projections (13, 14) for acting on outflowing air with a predetermined flow direction, on the exit end of which in each case one of the air blowing-out openings (5) is arranged.

## Revendications

1. Véhicule à des fins de transport de personnes comprenant un agencement de conditionnement d'air, qui comprend un appareil de conditionnement monté dans la partie de toit du véhicule, un conduit de conditionnement principal, qui est alimenté en air conditionné par l'appareil de conditionnement et qui s'étend dans la partie de toit dans la direction longitudinale du véhicule et au moins un conduit (3) de bifurcation pour de l'air, partant du conduit de conditionnement principal et s'étendant le long des parois latérales du véhicule vers la bas en direction du plancher d'un espace intérieur réservé aux passagers du véhicule,
dans lequel un tronçon d'extrémité inférieur du conduit (3) de bifurcation pour de l'air débouche dans un dispositif (1) d'insufflation d'air en forme de récipient, qui a plusieurs ouvertures (5) d'insufflation d'air, qui débouchent directement dans l'espace intérieur réservé aux passagers du véhicule, **caractérisé en ce que** le dispositif (1) d'insufflation d'air est disposé dans la partie de pied d'un habillage (4) de colonne de porte du véhicule, qui se trouve dans la direction longitudinale du véhicule entre une porte (19) d'accès à une partie (11) d'accès du véhicule et une paroi (15) latérale, qui délimite latéralement vers l'extérieur une partie (7) de siège du véhicule, et une première partie (12) des ouvertures (5) d'insufflation de l'air sont dirigées pour insuffler de l'air le long de la paroi (15) latérale du véhicule.

2. Véhicule suivant la revendication 1,
**caractérisé en ce que**
la bifurcation du conduit (3) pour de l'air a une section transversale circulaire et le dispositif (1) d'insufflation d'air est parallélépipédique.

3. Véhicule suivant la revendication 1 ou 2,
**caractérisé en ce que**
les ouvertures (5) d'insufflation d'air du dispositif (1) d'insufflation d'air sont dimensionnées et disposées de manière à réaliser une caractéristique d'insufflation d'air principalement horizontale du dispositif d'insufflation d'air.

4. Véhicule suivant l'une des revendications 1 à 3,
**caractérisé en ce qu'**
une deuxième partie (16) des ouvertures (5) d'insufflation d'air sont dirigées pour insuffler de l'air dans la partie (7) de siège suivant un angle horizontal aigu avec la paroi (15) latérale.

5. Véhicule suivant l'une des revendications 1 à 4,
**caractérisé en ce qu'**
une troisième partie (17) des ouvertures (5) d'insufflation d'air sont dirigées pour insuffler de l'air dans une direction transversale du véhicule.

6. Véhicule suivant l'une des revendications 1 à 5,
**caractérisé en ce qu'**
une quatrième partie (18) des ouvertures (5) d'insufflation d'air sont dirigées pour insuffler de l'air le long de la porte (19) d'accès.

7. Véhicule suivant l'une des revendications 1 à 6,
**caractérisé en ce que**
le dispositif (1) d'insufflation d'air a des tubulures (13, 14) de conduit d'écoulement pour l'alimentation en air sortant suivant une direction d'écoulement définie à l'avance, aux extrémités de sortie desquelles est disposée respectivement l'une des ouvertures (5) d'insufflation d'air.
